# EUROPEAN PATENT SPECIFICATION

(11) **EP 0 874 351 B1**
(45) Date of publication and mention of the grant of the patent: **07.05.2003**
(21) Application number: 97121323.6
(22) Date of filing: 04.12.1997
(51) Int. Cl.: G10K 9/122

(54) **Ultrasonic transmitter-receiver**
Ultraschallsende-/empfangsgerät
Dispositif émetteur-récepteur d'ultrasons

(30) Priority: 21.04.1997 JP 10356397
(43) Date of publication of application: 28.10.1998
(73) Proprietor: MATSUSHITA ELECTRIC INDUSTRIAL CO., LTD., Kadoma-shi, Osaka 571-8501 (JP)
(72) Inventor: Yamaguchi, Takeshi, Osaka City, 532 (JP); Takada, Masahiro, Kitajima-cho, Toyohashi City, 440 (JP); Nomura, Noboru, Kyoto City, 612 (JP); Kawasaki, Osamu, Kyotanabe City, 610-03 (JP); Ishihara, Hirotaka, Okazaki, Kosai City, 431-04 (JP)
(74) Representative: Jung Schirdewahn Lemke

(56) References cited:
- EP-A- 0 075 273
- EP-A- 0 664 079
- WO-A-89/05199
- FR-A- 2 361 709
- FR-A- 2 633 139
- US-A- 2 967 957
- US-A- 4 190 783
- US-A- 4 437 032
- US-A- 4 461 177
- US-A- 4 556 814
- US-A- 4 754 440
- US-A- 4 909 240
- PATENT ABSTRACTS OF JAPAN vol. 1997, no. 05, 30 May 1997 (1997-05-30) -& JP 09 023498 A (MATSUSHITA ELECTRIC IND CO LTD), 21 January 1997 (1997-01-21)
- PATENT ABSTRACTS OF JAPAN vol. 014, no. 344 (E-0955), 25 July 1990 (1990-07-25) & JP 02 116300 A (MATSUSHITA ELECTRIC IND CO LTD), 27 April 1990 (1990-04-27)
- PATENT ABSTRACTS OF JAPAN vol. 1997, no. 04, 30 April 1997 (1997-04-30) & JP 08 331695 A (MURATA MFG CO LTD), 13 December 1996 (1996-12-13)
- PATENT ABSTRACTS OF JAPAN vol. 007, no. 129 (E-179), 4 June 1983 (1983-06-04) & JP 58 044899 A (SANYO DENKI KK), 15 March 1983 (1983-03-15)

## Description

### Background of the invention

The present invention relates to a vibrating member for an ultrasonic transmitter-receiver to be used in a position detection apparatus or a distance measuring apparatus or the like for detecting the position or distance of an object by using ultrasonic waves.

From US-A- 4 556 814 an ultrasonic transmitter-receiver is known comprising a piezoelectric element having electrodes to be supplied with or outputting therefrom a signal of an ultrasonic frequency, a vibrating cylinder having a cylindrical side wall with two ends, an upper base wall closing one end of the cylinder, said piezoelectric element being fixedly attached to said upper base wall, and a groove being formed at a portion of the upper base wall surrounding a portion where said piezoelectric element is fixedly attached, an insulating base for closing the other end of the cylinder, and terminals passing through said insulating base and being electrically connected to said electrodes.

According to this prior art the groove has the purpose of absorbing or relaxing of the transverse wave emanated from the piezoelectric element and is located adjacent to the outer periphery of such element. At the same time the groove keeps a distance from the inner surface of the cylindrical side wall of the vibrating cylinder.

The object of the present invention is to provide a vibrating member for an ultrasonic transmitter-receiver as mentioned above which is capable of producing larger sound-pressure output on the one side and larger receiving sensitivity on the other.

This is achieved by the features of claim 1.

### Brief description of the several views of the drawing.

Fig. 1 is a side elevational view, in cross section, showing a construction of a vibrating member of an ultrasonic transmitter-receiver ;
Fig. 2 is a side elevational view, in cross section, conceptually illustrating a vibrational displacement condition of the vibrating member shown in Fig. 1;
Fig. 3 is a side elevational view, in cross section, showing a construction of an embodiment of a vibrating member.
Fig. 4 is a side elevational view, in cross section, showing a construction of another embodiment of a vibrating member.
Fig. 5 is a side elevational view, in cross section, showing a construction of a further embodiment of a vibrating member.
Fig. 6 is a side elevational view, in cross section, showing an ultrasonic transmitter-receiver according to the invention.
Fig. 7 is a side elevational view, in cross section, showing another construction of a vibrating member.
Fig. 8 is a side elevational view, in cross section, showing an alternative construction of a vibrating member.

### Detailed description of the invention

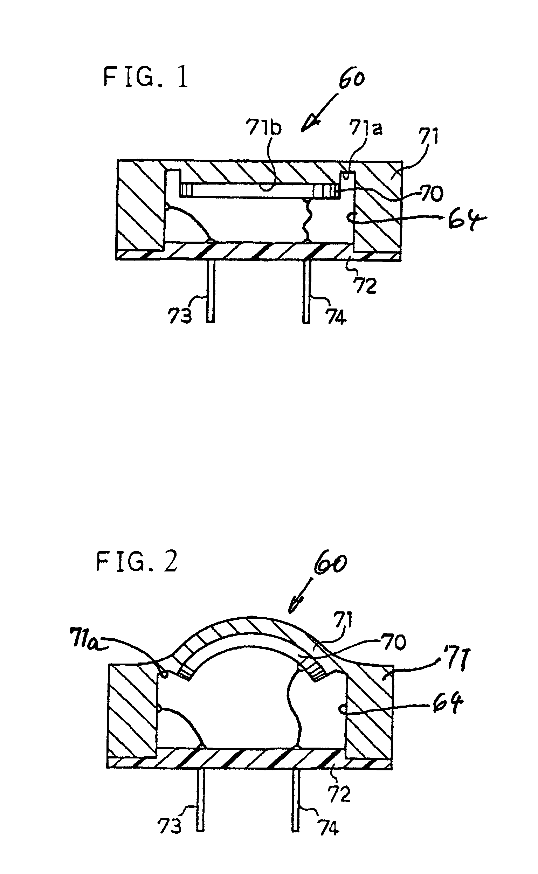

Fig. 1 is a side elevational view, in cross section, showing the construction of the vibrating member . As shown in Fig. 1 the vibrating member comprises a vibrating cylinder 60 which is made up of a cylindrically shaped metal side wall 71 having a closed top and an open bottom. The vibrating cylinder 60 is made by a known metal forming process such as die casting. A piezoelectric disc 70 being a disc-shaped piezoelectric element is fixedly attached to an inside face of an upper base wall 71b forming the top of the vibrating cylinder 60. Electrodes are formed on the upper and lower faces, i.e. the principal faces, of the piezoelectric disc 70. The electrode on the upper face of the piezoelectric disc 70 is bonded to the vibrating cylinder 60 in electrically conduction relationship. The open bottom of the vibrating cylinder 60 is closed by a base 72 which is a plastic lid. The base 72 is provided with two terminal pins 73 and 74. The terminal pin 73 is electrically connected to the vibrating cylinder 60, while the other pin 74 is electrically connected to the electrode on the lower face of the piezoelectric disc 70. The vibrating cylinder 60 is made of a high rigidity metal material such as stainless steel and, as shown in Fig. 1, the piezoelectric disc 70 is bonded to its upper inside face. A groove 71a surrounds the circumferential portion of the upper inside face around the piezoelectric disc 70, in other words, the groove 71a is located adjacent to the inner surface 64 of the cylindrical side wall 71. Thus the vibrating cylinder 60 is a cylindrical metal vibrator having a hollow interior space and an open end; when an AC voltage of an ultrasonic frequency is applied to the terminal pins 73, 74, this metal vibrator vibrates at the ultrasonic frequency and outputs an ultrasonic wave.

The magnitude of sound-pressure output of the vibrating member is determined by the displacement volume when the metal vibrating portion vibrates. Accordingly, in order to increase the sound-pressure output of the vibrating member, the amount of deflective displacement of the upper base wall 71b of the vibrating cylinder 60 must be made as large as possible. This is attained by locating a groove 71a adjacent to the inner surface 64 of the cylindrical side wall 71 as mentioned above.

Fig. 2 is a side elevational view, in cross section, conceptually illustrating a vibrational displacement condition of the vibrating member shown in Fig. 1. The vibrating cylinder 60 shown in Fig. 1 has the groove 71a with a rectangular cross section, formed in the circumference of the inside face of upper base wall 71b. This serves to increase the amount of deflective displacement in the upper inside face or the upper base wall, respectively, of the vibrating cylinder 71, increasing the sound-pressure output. Furthermore, the piezoelectric disc 70 and the wiring portions of the terminal pins 73, 74 are housed in the space enclosed by the vibrating cylinder 60 and an insulating base 72.

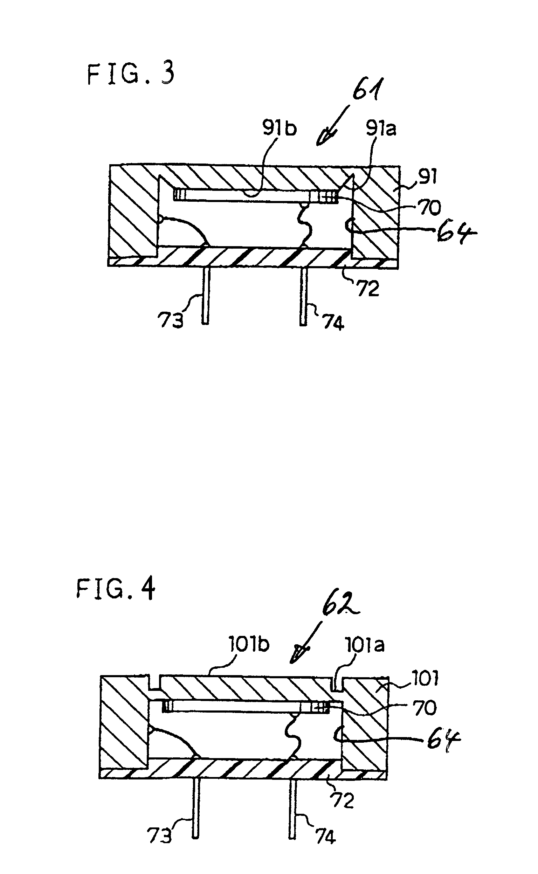

Modified embodiments of the vibrating member of the present invention are shown in Figs. 3, 4 and 5. The vibrating members shown in Figs. 3, 4 and 5 are so constructed as to increase the amount of deflective displacement of the vibrating upper base wall 71b as much as possible in order to increase the sound-pressure output.

The vibrating member shown in Fig. 3 differs from the vibrating member shown in Fig. 1 in the shape of the annular groove 91a formed around the circumference of the piezoelectric disc 70 on the inside face of the upper base wall 91b of the vibrating cylinder 61; that is, the groove is wedge-shaped in cross section with an acute angle. In other respects, the construction is similar to the vibrating member shown in Fig. 1, and those parts in Fig. 3 with the same in function and construction as those previously shown are designated by the same reference numerals.

In the vibrating member shown in Fig. 4, no groove is formed on the inside face of the upper base wall 101b of the vibrating cylinder 62, but instead, an annular groove 101a is formed on the outside face of upper base wall 101b of the vibrating cylinder 62 in the position opposite from the position around the circumferential portion of the upper inside face of the upper base wall 71b, around the piezoelectric disc 70. In other respects, the construction is the same as the vibrating member shown in Fig. 1, and those parts in Fig. 4 with the same in function and construction as those previously shown are designated by the same reference numerals.

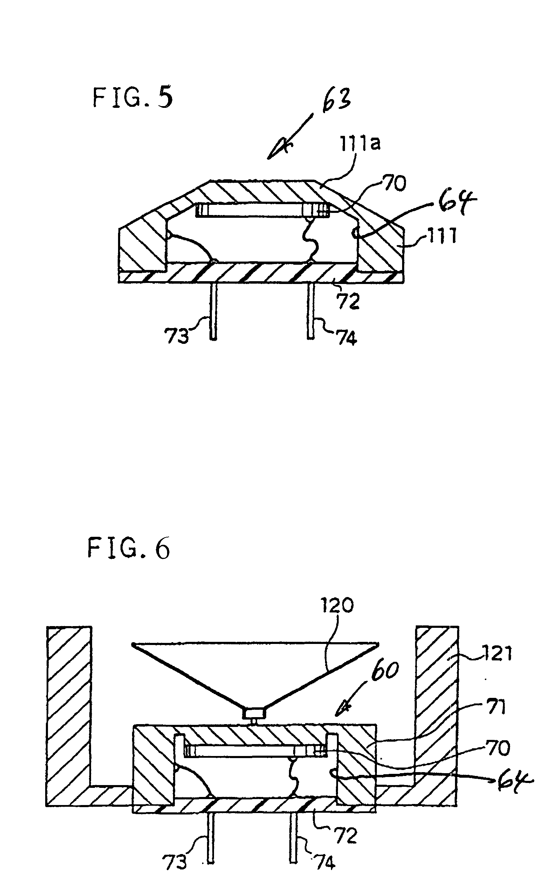

The vibrating member shown in Fig. 5 has a sloping portion formed on the upper outside face of the vibrating cylinder 63, being a thinning 111. As shown in Fig. 5, the shape of the vibrating cylinder 63 is such that the thickness of the sloping portion is reduced to be such thinning 111a compared with the thickness of the upper base wall where the piezoelectric disc 70 is bonded. In other respects, the construction is the same as the ultrasonic transmitter shown in Fig. 1, and those parts in Fig. 5 with the same in function and construction as those previously shown are designated by the same reference numerals.

Next, the invention is described referring to Fig. 6. Fig. 6 is a side elevational view, in cross section. Those parts with the same in function and construction as those in the ultrasonic transmitter of Fig. 1 are designated by the same reference numerals as those used in Fig. 1.

A cone 120, as a hollow conical-shaped diaphragm, is mounted on the vibrating cylinder 61 of the vibrating member. This serves to further increase the sound-pressure output of the vibrating member compared with the foregoing embodiments. The node of vibration of the cone 120 lies at positions symmetrical about the center axis of the cone 120. Further, an ultrasonic wave reflector 121 having an open end is mounted to the vibrating cylinder 60 to match the phase of the ultrasonic wave radiated from the rear surface of the cone 120. In this way, the vibrating member achieves a large output and sharp directivity while, at the same time, providing protection against water drops and dust.

As described above, according to these embodiments, the thickness of the portion of the upper base wall of the vibrating cylinder, surrounding the portion where the piezoelectric disc 70 is bonded, is reduced compared with the center portion thereof, to increase the amplitude of the vibrating plate of the vibrating cylinder. This achieves the construction of an vibrating member which is compact in size and capable of producing a large output.

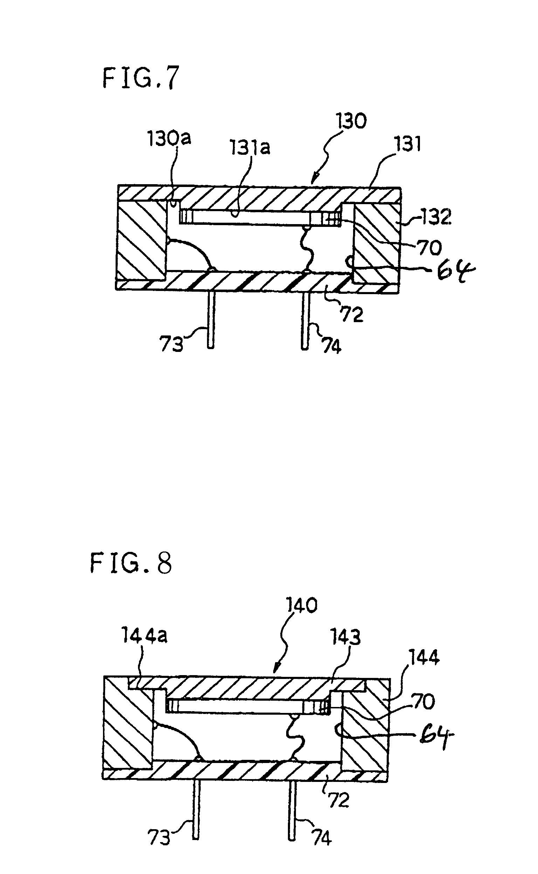

Further examples of the vibrating member will be described below with reference to Figs. 7 and 8.

Fig. 7 is a side elevational view, in cross section, showing the construction of another vibrating member. In Fig. 7, constituent elements which are the same in function and construction as those in the vibrating member of the foregoing embodiments are designated by the same reference numerals, and explanatory descriptions of such elements are omitted.

As shown in Fig. 7, a vibrating cylinder 130 comprises a disc-shaped vibrating plate 131 as an upper base wall and a cylindrical member having an open upper end and an open lower end, the vibrating plate 131 forming an upper base wall being mounted in such a manner as to close the open upper end of the cylindrical member having side wall 132. The piezoelectric disc 70 is fixedly attached to the lower face 131a of the vibrating plate 131, and the electrode on the upper face of the piezoelectric disc 70 is bonded to the vibrating plate 131 in electrically conducting relationship.

The vibrational displacement condition of the vibrating member of this other embodiment is indicated by the amount of deflective displacement of the vibrating plate 131 or upper base wall, resp., similarly to that shown in Fig. 2 in the first embodiment. In the vibrating member of this other embodiment, a groove 130a surrounds the vibrating cylinder 130 along the inner surface 64 thereof. Accordingly, the vibrational displacement is large inside of the groove 130a, while on the other hand, the amount of vibrational displacement is extremely small outside of the groove 130a. This structure significantly reduces the internal stress occurring in the joint between the vibrating plate 131 and the cylindrical side wall 132, as a result of which the structure and shape of the vibrating cylinder 130 in the vibrating member of this embodiment does not adversely influence the amount of deflective displacement of the vibrating plate 131 and can thus achieve an increase in the sound-pressure output of the vibrating member.

The vibrating member of this embodiment can be manufactured by bonding the piezoelectric disc 70 and the vibrating plate 131 together and then bonding the vibrating plate 131 to the cylindrical wall 132. In this way, in the vibrating member of this embodiment, the vibrating cylinder 130 comprises the vibrating plate 131 and the cylindrical side wall 132. Therefore, according to this embodiment, the vibrating cylinder 130 need not be formed as a one-piece unit by metal cutting, and thus an inexpensive, easy-to-manufacture vibrating member can be achieved reducing manufacturing costs drastically.

Next, a specific example of an alternative construction of the vibrating member of the other embodiment will be described.

Fig. 8 is a side elevational view, in cross section, showing an alternative construction. The vibrating member of this example comprises a disc-shaped vibrating plate 143 as an upper base wall and a cylindrically shaped member having a cylindrical side wall 144 with an upper open end and a lower open end. A step 144a at an end face of the upper open end of the cylindrical side wall 144 is provided. The vibrating plate 143 is fitted onto this step 144a to close the upper open end of the cylindrical side wall 144. In other respects the construction of the vibrating member shown in Fig. 8 is the same as that of the vibrating member shown in Fig. 7. Since the bonding portion to the vibrating cylinder 140 is formed outside the vibrating portion of the vibrating plate 143, stress due to the deflective displacement of the vibrating plate 143 does not adversely influence the bonding portion. As a result, the vibrating member shown in Fig. 8 is free from breakage at the bonding portion and is therefore highly reliable in construction.

## Claims

1. An ultrasonic transmitter-receiver comprising
a piezoelectric element (70) having electrodes to be supplied with or outputting therefrom a signal of an ultrasonic frequency,
a vibrating cylinder (60; 61; 62; 63; 130; 140) having a cylindrical side wall (71; 91; 101; 111; 132; 144) with two ends, an upper base wall (71b; 91b; 101b; 131; 143) closing one end of the cylinder,
said piezoelectric element (70) being fixedly attached to said upper base wall (71b; 91b; 101b; 131; 143), and a groove (71a; 91a; 101a; 130a) being formed at a portion of the upper base wall (71b; 91b; 101b; 131; 143) surrounding a portion where said piezoelectric element (70) is fixedly attached, an insulating base (72) for closing the other end of the cylinder (60; 61; 62; 63; 130; 140), and
terminals (73, 74) passing through said insulating base (72) and being electrically connected to said electrodes, wherein
the groove or a thinning (71a; 91a; 101a; 130a) is located adjacent to the inner surface (64) of the cylindrical sidewall (71; 91; 101; 111; 132; 144), **characterized in that**
a hollow conical shaped diaphragm (120) is mounted on the vibrating cylinder (60), the nodes of vibration of the diaphragm (120) lying at positions symmetrical about the center axis of the diaphragm, and that an ultrasonic wave reflector (121) having an open end is mounted to the vibrating cylinder (60) to match the phase of the ultrasonic wave to that of the diaphragm (120) and reflect the ultrasonic wave radiated from the rear surface of the diaphragm (120).

2. An ultrasonic transmitter-receiver according to claim 1, **characterized in that** the upper base wall (131; 143) is bonded to said cylindrical side wall (132; 144).

3. An ultrasonic transmitter-receiver according to claim 2, **characterized in that** a step (144a) is provided at the open end face of the cylindrical side wall (144) and that the upper base wall (143) is fitted onto this step (144a) to close the upper open end face of the cylindrical side wall (144).

## Patentansprüche

1. Ein Ultraschall-Sende/-Empfangsgerät mit
einem piezoelektrischen Element (70), welches Elektroden aufweist, die mit einem Ultraschallfrequenzsignal beaufschlagt werden oder ein solches abgeben,
einem Vibrationszylinder (60; 61; 62; 63; 130; 140), der eine zylindrische Seitenwand (71; 91; 101; 111; 132; 144) mit zwei Enden und eine obere Basiswand (71b; 91b; 101b; 131; 143) aufweist, die ein Ende des Zylinders abschließt,
wobei das piezoelektrische Element (70) an der oberen Basiswand (71b; 91b; 101b; 131; 143) fest angebracht ist und an einem Abschnitt der oberen Basiswand (71b; 91; 101b; 131; 143) eine Nut (71a; 91a; 101a; 130a) ausgebildet ist, die einen Bereich umgibt, an dem das piezoelektrische Element (70) fest angebracht ist,
einem Isoliersockel (72) für den Abschluß des anderen Endes des Zylinders (60; 61; 62; 63; 130; 140), und
Anschlüssen (73, 74) die durch den Isoliersockel (72) hindurchtreten und elektrisch mit den genannten Elektroden verbunden sind, wobei
die Nut oder eine Ausdünnung (71a; 91a; 101a; 130a) an die Innenfläche (64) der zylindrischen Seitenwand (71; 91; 101; 111; 132; 144) angrenzend angeordnet ist,
**dadurch gekennzeichnet, daß**
auf dem Vibrationszylinder (60) ein hohles, konisch geformtes Diaphragma (120) angebracht ist, die Vibrationsknoten des Diaphragmas (120) an um die Mittelachse des Diaphragmas symmetrischen Stellen liegen, und daß ein ein offenes Ende aufweisender Ultraschallwellenreflektor (121) am Vibrationszylinder (60) angebracht ist, um die Phase der Ultraschallwelle an diejenige des Diaphragmas anzupassen und die von der rückwärtigen Fläche des Diaphragmas (120) abgestrahlte Ultraschallwelle zu reflektieren.

2. Ein Ultraschall-Sende/-Empfangsgerät nach Anspruch 1,
**dadurch gekennzeichnet, daß**
die obere Basiswand (131; 143) mit der zylindrischen Seitenwand (132; 144) verklebt ist.

3. Ein Ultraschall-Sende/-Empfangsgerät nach Anspruch 2,
**dadurch gekennzeichnet, daß**
an der offenen Endfläche der zylindrischen Seitenwand (144) ein Bund (144a) ausgebildet und die obere Basiswand (143) in diesen Bund (144a) eingepaßt ist, um die obere offene Endfläche der zylindrischen Seitenwand (144) zu schließen.

## Revendications

1. Emetteur-récepteur d'ultrasons comprenant
un élément piézoélectrique (70) ayant des électrodes qui doivent recevoir ou sortir de celles-ci un signal de fréquence ultrasonore,
un cylindre vibrant (60 ; 61 ; 62 ; 63 ; 130 ; 140) ayant une paroi latérale cylindrique (71 ; 91 ; 101 ; 111 ; 132 ; 144) avec deux extrémités, une paroi de base supérieure (71b ; 91b ; 101b ; 131 ; 143) fermant une extrémité du cylindre,
ledit élément piézoélectrique (70) étant fixé de manière sûre à ladite paroi de base supérieure (71b ; 91b ; 101b ; 131 ; 143), et une rainure (71a ; 91a ; 101a ; 130a) étant ménagée au niveau d'une partie de la paroi de base supérieure (71b ; 91b ; 101b ; 131 ; 143) entourant une partie où ledit élément piézoélectrique (70) est fixé de manière sûre,
une base isolante (72) pour fermer l'autre extrémité du cylindre (60 ; 61 ; 62 ; 63 ; 130 ; 140), et
des bornes (73, 74) passant à travers ladite base isolante (72) et étant reliées électriquement audites électrodes, dans lequel
la rainure ou un amincissement (71a ; 91a ; 101a ; 130a) est positionnée adjacent à la surface intérieure (64) de la paroi latérale cylindrique (71 ; 91 ; 101 ; 111 ; 132 ; 144) **caractérisé en ce que**
un diaphragme de forme conique creuse (120) est monté sur le cylindre vibrant (60), les noeuds de vibration du diaphragme (120) se trouvant à des positions symétriques autour de l'axe central du diaphragme, et **en ce qu'**un réflecteur d'ondes ultrasonores (121) ayant une extrémité ouverte est monté sur le cylindre vibrant (60) pour adapter la phase de l'onde ultrasonore à celle du diaphragme (120) et pour réfléchir l'onde ultrasonore émise depuis la surface arrière du diaphragme (120).

2. Emetteur-récepteur d'ultrasons selon la revendication 1, **caractérisé en ce que**
la paroi de base supérieure (131 ; 143) est soudée à ladite paroi latérale cylindrique (132 ; 144).

3. Emetteur-récepteur d'ultrasons selon la revendication 2, **caractérisé en ce**
**qu'**un gradin (144a) est disposé au niveau de la face d'extrémité ouverte de la paroi latérale cylindrique (144) et en ce que la paroi de base supérieure (143) est ajustée sur ce gradin (144a) pour fermer la face d'extrémité ouverte supérieure de la paroi latérale cylindrique (144).
